# EUROPÄISCHE PATENTANMELDUNG

(11) **EP 1 329 707 A2**
(43) Veröffentlichungstag der Anmeldung: **23.07.2003**
(21) Anmeldenummer: 03000037.6
(22) Anmeldetag: 07.01.2003
(51) Int. Cl.: G01N 21/01

(54) **Wechselbares Prozessfenster**

(30) Priorität: 17.01.2002 DE 10201541
(71) Anmelder: Bayer Aktiengesellschaft, 51368 Leverkusen (DE)
(72) Erfinder: Isbert, Karl, 47809 Krefeld (DE); Spauschus, Lutz, 47647 Kerken (DE); Heesen, Ulrich, 47839 Krefeld (DE)

(57) **Zusammenfassung**

Es wird ein Prozessfenster für die spektroskopische Untersuchung von Prozessgemischen beschrieben Das Prozessfenster besteht aus einer Fensterfassung (11) zur Aufnahme eines Fenster (2), einem Schraubzylinder (12), mit einem Strahlungsdurchgang (13) in seinem Kern und einem Außengewinde (14) zum Einschrauben des Schraubzylinders (12) in die Fensterfassung (11) sowie einem elastischen Dichtmittel (3) zwischen Fenster (2) und Schraubzylinder (12), wobei das Fenster (2) zu der dem Schraubzylinder (12) entgegengesetzten Prozessseite konisch verjüngend zulaufend ausgeführt ist.

## Beschreibung

Die Erfindung betrifft ein druckfestes Prozessfenster für die optisch spektroskopische Untersuchung von produktdurchströmten Rohrleitungen oder Apparaturen.

Aus der DE 4 414 975 A1 ist eine Vorrichtung zur spektroskopischen Analyse von Prozessgemischen bekannt, deren Hauptbestandteil ein in den Prozessraum eintauchender Messkristall ist, der unterhalb zweier konisch auslaufender Prozessfenster zur Ein- und Auskopplung von Messstrahlung angeordnet ist. Hierbei sind die Fenster so angeordnet, dass der Konusdurchmesser sich zur Apparateinnenraumseite erweitert, um bei Verfahren unter höherem Druck im Reaktorinnenraum nach einem Bruch des Messkristalls eine selbstdichtende Sperre für das Prozessgemisch zu erhalten. Außerdem ist der Einsatz von Klebern für die in der DE 4 414 975 A1 genannten Prozessfenster vorgeschlagen.

Aufgabe der Erfindung ist es, ein verbessertes Prozessfenster zu entwickeln, das einerseits druckdicht an einem Behälter oder einer Rohrleitung angebracht werden kann, andererseits zur Reinigungs- und Überwachungszwecken schnell montiert und demontiert werden kann.

Die Aufgabe wird erfindungsgemäß gelöst durch ein Prozessfenster bestehend aus einer Fensterfassung zur Aufnahme eines Fensters, einem Schraubzylinder, mit einem Strahlungsdurchgang in seinem Kern und einem Außengewinde zum Einschrauben des Schraubzylinders in die Fensterfassung sowie einem elastischen Dichtmittel zwischen Fenster und Schraubzylinder, dadurch gekennzeichnet, dass das Fenster zu der dem Schraubzylinder entgegengesetzten Prozessseite konisch verjüngend zulaufend ausgeführt ist.

Eine bevorzugte Ausführung des Prozessfensters weist zwischen dem Schraubzylinder und der Fensterfassung ein zusätzliches Dichtmittel oberhalb des Gewindes auf.

Die Befestigung des Prozessfensters erfolgt besonders vorteilhaft über eine Klemmringverschraubung, die an der Rohrleitung oder dem Behälter, insbesondere lösbar, befestigt ist. Der Klemmring der Klemmringverschraubung ist konisch verengt nach unten ausgeführt und wird mit Hilfe einer Überwurfmutter an der Verschraubung so in den Dichtsitz der Verschraubung eingepresst, dass sich seine Innenfläche an die Außenfläche des Schraubzylinders kraftschlüssig anlegt. Nach Lösung der Überwurfmutter kann das Prozessfenster als Einsatz leicht aus der Rohrleitung bzw. dem Prozessbehälter entfernt werden.

Alternativ zur der Klemmringverschraubung kann auf dem äußeren Durchmesser des Schraubzylinders ein Außengewinde angebracht sein, mit Hilfe dessen das Prozessfenster direkt in eine Öffnung in der Rohrleitungswand oder Behälterwand mit Innengewinde eingeschraubt werden kann. In diesem Falle sind unterhalb des Außengewindes im Schraubzylinder weitere Ringdichtungen vorgesehen, um den Prozessraum von der Umgebung zu trennen.

Das Prozessfenster ermöglicht zum Beispiel die Inline-Messung an beliebigen produktdurchströmten Rohrleitungen oder Reaktionsbehältern. Wahlweise kann das Prozessfenster auch an einem trennbaren Rohrleitungsflansch angebracht werden. Bevorzugt wird insbesondere bei spektroskopischen Bestrahlungsmessungen eine Anordnung gewählt, bei der zwei erfindungsgemäße Prozessfenster gegenüberliegend in einer Rohrleitung oder einem Behälter angebracht sind.

Als Dichtwerkstoffe für die mit der Erfindung einzusetzenden Dichtmittel und insbesondere Ringdichtung in die den jeweiligen Prozessanforderungen entsprechend bekannten Werkstoffe: PTFE, Kalrez® (Perfluorelastomer), Viton® (Vinylidenfluoridhexafluorpropylen-Copolymerisat) bzw. bei höheren extremen Temperaturen und extremen Druck Helicoflexringe. Für die Klemmringverschraubung können handelsübliche Verschraubungen mit genormtem Innendurchmesser verwendet werden, denen der Schraubzylinder wahlweise hinsichtlich seines Außendurchmessers angepasst wird.

Für die von Produkt berührten mechanischen Teile des Prozessfensters kommen die üblichen Werkstoffe: Edelstahl, gegebenenfalls Tantal, Hastelloy oder auch PVDF (Polyvinylidenfluorid) in Frage. Die optischen Teile bestehen aus den üblichen optischen Werkstoffen Saphir, Glas, Quarzglas, transparenter Kunststoff etc.

Die Erfindung wird nachstehend beispielhaft anhand der Figuren näher erläutert.

Es zeigen
- Fig. 1: ein erfindungsgemäßes Prozessfenster im Querschnitt, getrennt von der Klemmringverschraubung
- Fig. 2: ein Querschnitt durch eine Rohrleitung mit zwei gegenüberstehend angeordneten Prozessfenstern, von denen das Obere mittels einer Klemmringverschraubung 5 und das Untere mittels einer Gewindeverschraubung direkt in einem Flanschstück 10 der Rohrleitung befestigt ist.
- Fig. 3: eine Variante des Prozessfensters nach Fig. 1.

### Beispiele

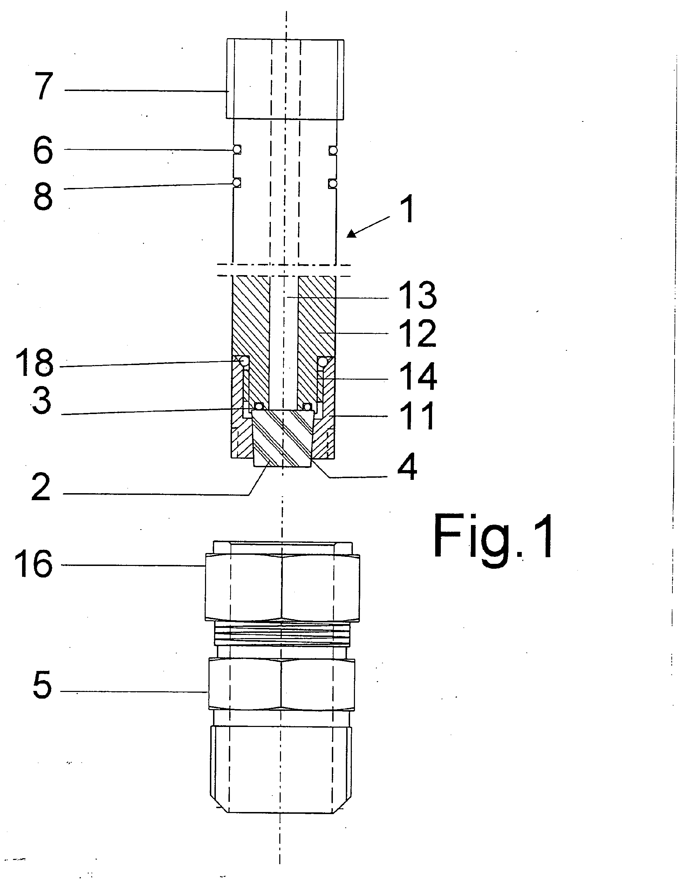

Figur 1 zeigt im oberen Teil ein Querschnitt durch ein Prozessfenster 1 mit dem konischen Fenster 2, das in die Fensterfassung 11 eingelassen ist. Das Fenster 2 hat einen Normschliff mit der Normsteigung von 1:10. Das Fenster 2 wird mittels des Schraubzylinders 12, dessen Außengewinde 14 in das Innengewinde der Fensterfassung 11 eingreift, in die Fensterfassung fest eingeschraubt. Eine Ringdichtung 3 aus elastischem Dichtungsmaterial sorgt für eine verspannungsfreie Befestigung des Fensters 2. Diese Bauform ermöglicht, eine gleichmäßige Druckübertragung durch die Dichtung 3 auf das Fenster 2. Der Konusschliff des Fensters 2 trägt die Last auf der ganzen Fläche. Somit fehlen die bei anderen Fensterkonstruktionen üblichen Ringspalte 4, in denen sich z.B. störende alte Messlösungsrückstände festsetzen können.

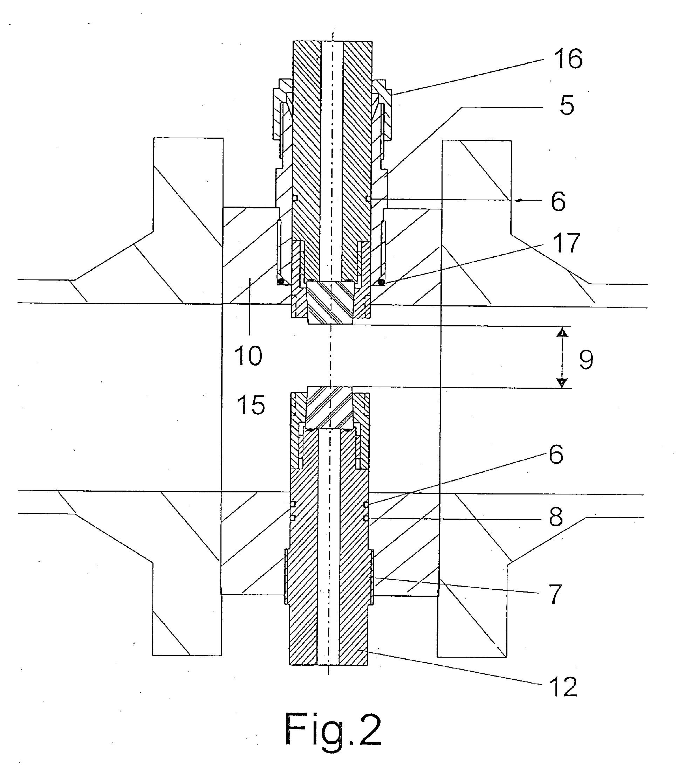

Das Prozessfenster 1 wird in die Klemmringverschraubung 5 eingesetzt (siehe Figur 2 oben) und mittels der Überwurfmutter 16 der Klemmringverschraubung 5 fixiert. Der untere Teil der Klemmringverschraubung 5 ist in ein Flanschstück 10 einer Rohrleitung eingeschraubt und mittels eines Dichtungsrings 17 gegen den Prozessraum 15 abgedichtet.

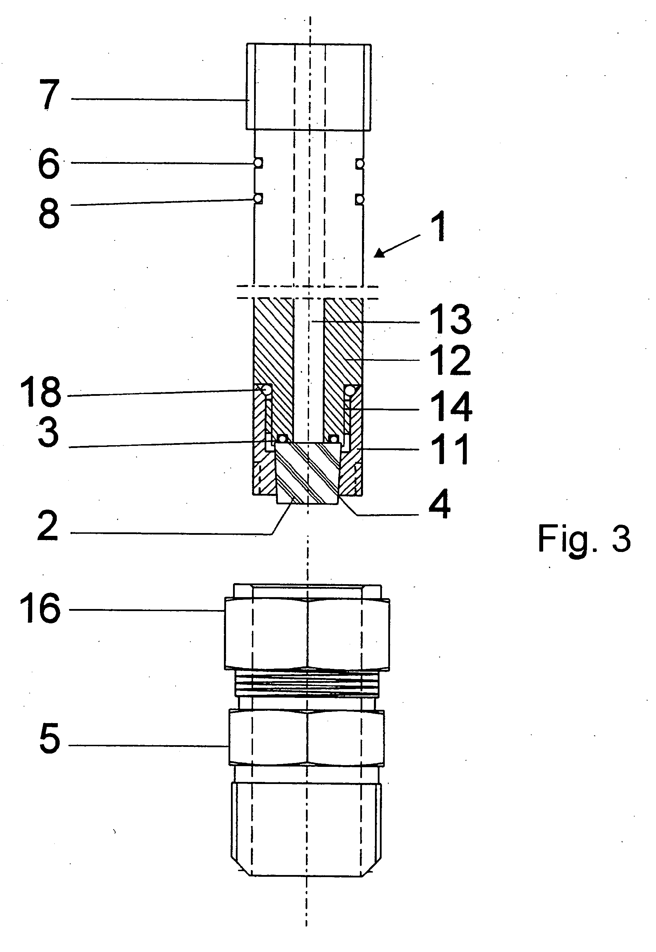

Der obere Teil von Fig. 1 zeigt eine Alternative zu der Verschraubung mittels eines Klemmrings 5. Hierbei weist der Schraubzylinder 12 an seinem oberen Ende ein Außengewinde 7 auf sowie weitere Dichtringe 6 und 8 in Ringnuten. Ein solch gestaltetes Prozessfenster wird in das Innengewinde des Rohrflansches 10 eingeschraubt. Mit dieser Konstruktion können zwei gegenüberstehende optische Fenster 2 auf einen beliebigen Abstand zueinander montiert werden, wobei man eine reproduzierbare optische Schichtdicke 9 erhält. Die alternative Ausführung nach Fig. 3 weist eine zusätzliche Ringdichtung 18 oberhalb des Gewindes 14 auf.

Mit Hilfe einer solchen Prozessfensteranordnung wird die Inline-Messung an produktdurchströmten Rohrleitungen vereinfacht. Das in Fig. 2 gezeigte Flanschstück 10 kann zum Beispiel direkt in eine Prozessleitung oder eine Prozessnebenleitung eingebaut werden.

## Patentansprüche

1. Prozessfenster für die spektroskopische Untersuchung von Prozessgemischen in Rohrleitungen oder Behältern bestehend aus einer Fensterfassung (11) zur Aufnahme eines Fenster (2), einem Schraubzylinder (12), mit einem Strahlungsdurchgang (13) in seinem Kern und einem Außengewinde (14) zum Einschrauben des Schraubzylinders (12) in die Fensterfassung (11) sowie einem elastischen Dichtmittel (3) zwischen Fenster (2) und Schraubzylinder (12), **dadurch gekennzeichnet, dass** das Fenster (2) zu der dem Schraubzylinder (12) entgegengesetzten Prozessseite (15) konisch verjüngend zulaufend ausgeführt ist.

2. Prozessfenster nach Anspruch 1, **dadurch gekennzeichnet, dass** zwischen dem Schraubzylinder (12) und der Fensterfassung (11) ein zusätzliches Dichtmittel oberhalb des Gewindes (14) vorgesehen ist.

3. Prozessfenster nach Anspruch 1 oder 2, **dadurch gekennzeichnet, dass** das Prozessfenster über eine Klemmringverschraubung (5), die an der Rohrleitung oder dem Behälter, insbesondere lösbar, befestigt ist mit der Rohrleitung oder dem Behälter verbunden ist.

4. Prozessfenster nach einem der Ansprüche 1 oder 2, **dadurch gekennzeichnet, dass** am äußeren Durchmesser des Schraubzylinders (12) ein Außengewinde (7) angebracht ist, mit Hilfe dessen das Prozessfenster (1) direkt in ein Innengewinde einer Öffnung in der Rohrleitungs- oder Behälterwand schraubbar ist, und wobei unterhalb des Außengewindes (7) im Schraubzylinder (12) weitere Ringdichtungen (6, 8) vorgesehen sind.

5. Optische Anordnung aufweisend wenigstens zwei Prozessfenster nach einem der Ansprüche 1 bis 4, **dadurch gekennzeichnet, dass** die Prozessfenster zueinander gegenüberstehend in einer Rohrleitung oder einem Behälter angeordnet sind.
